(19) Europäisches Patentamt
European Patent Office
Office européen des brevets

(11) **EP 3 511 543 B1**

(12) **FASCICULE DE BREVET EUROPEEN**

(45) Date de publication et mention
de la délivrance du brevet:
**19.08.2020   Bulletin 2020/34**

(51) Int Cl.:
***F01N 11/00*** *(2006.01)*

(21) Numéro de dépôt: **18210764.9**

(22) Date de dépôt: **06.12.2018**

(54) **PROCÉDÉ D'ESTIMATION DU VIEILLISSEMENT D'UN CATALYSEUR POUR MOTEUR THERMIQUE**

VERFAHREN ZUR ABSCHÄTZUNG DER ALTERUNG EINES KATALYSATORS FÜR WÄRMEKRAFTMOTOR

METHOD FOR ESTIMATING THE AGEING OF A CATALYST FOR A HEAT ENGINE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **11.01.2018   FR 1850226**

(43) Date de publication de la demande:
**17.07.2019   Bulletin 2019/29**

(73) Titulaire: **PSA Automobiles SA**
**78300 Poissy (FR)**

(72) Inventeurs:
• **LEFEBVRE, DAMIEN**
  **78800 Houilles (FR)**
• **GLATIGNY, BRUNO**
  **78600 Maisons-Laffitte (FR)**

(56) Documents cités:
**WO-A1-2007/105830      US-A1- 2007 261 390**
**US-A1- 2012 317 960**

## Description

L'invention concerne de manière générale le domaine de la commande d'un moteur thermique équipé d'un catalyseur d'oxydation pour la dépollution des gaz d'échappement, notamment dans un véhicule automobile. Plus particulièrement, l'invention se rapporte à un procédé d'estimation du vieillissement d'un catalyseur pour un moteur thermique à essence, mais ceci n'est pas limitatif et le procédé pourra être appliqué à d'autres carburants.

L'information de vieillissement du catalyseur est utilisée par le calculateur de commande moteur du véhicule, dit également « unité de contrôle moteur », pour la mise en œuvre de ses stratégies de commande. L'unité de contrôle moteur doit effectuer des réglages et calibrations pour la dépollution du moteur thermique, par exemple, la durée de chauffe du catalyseur, les consignes de richesse de mélange air/carburant pour la mise en action du catalyseur et autres réglages, et requiert pour cela de connaître le vieillissement du catalyseur. Par ailleurs, cette information de vieillissement est aussi utile pour détecter la fin de vie du catalyseur et informer le système de diagnostic embarqué dit « OBD » (pour « On-Board Diagnostic » en anglais).

La capacité du catalyseur à stocker de l'oxygène dite « OSC » (pour « Oxygen Storage Capacity » en anglais) fournit une bonne information de l'état de vieillissement du catalyseur et de son aptitude à traiter efficacement les polluants, tels que les hydrocarbures imbrûlés (HC) et le monoxyde de carbone (CO). La capacité OSC d'un catalyseur neuf est élevée et se dégrade avec le vieillissement de celui-ci.

Dans l'état de la technique, Il est connu un diagnostic de vieillissement du catalyseur dans lequel la capacité OSC de celui-ci est mesurée à intervalle régulier. L'objectif de ce diagnostic est de distinguer un catalyseur vieilli qui permet de respecter les normes environnementales de pollution, d'un catalyseur très vieilli qui n'autorise plus le respect de ces normes.

La capacité OSC du catalyseur dépend du vieillissement du catalyseur, mais aussi de la température des gaz échappement et du débit des gaz échappement. Ainsi, lors d'une mesure pendant un roulage du véhicule, il est nécessaire de tenir compte du point de fonctionnement du moteur thermique pour obtenir une valeur de la capacité OSC équivalente à ce point. Dans le diagnostic connu mentionné ci-dessus, il est fait le choix d'une meilleure précision de la mesure de la capacité OSC pour un catalyseur très vieilli. La précision de la mesure pour un catalyseur neuf ou modérément vieilli n'est pas un objectif affiché de ce diagnostic. De plus, dans ce diagnostic, la mesure de la capacité OSC est intrusive, car sa réalisation, lorsque les conditions de fonctionnement du moteur thermique sont jugées satisfaisantes, demande un pilotage particulier de la richesse du mélange air/carburant. Le nombre de mesures réalisables de la capacité OSC est limité par cet aspect intrusif de la mesure.

Par US7536851 B2, il est connu un procédé de surveillance de l'état de vieillissement d'un catalyseur qui utilise deux sondes à oxygène placées en amont et en aval du catalyseur. Dans ce procédé, deux valeurs de richesse du mélange air/carburant sont successivement commandées et des première et deuxième tensions délivrées respectivement par les sondes à oxygène sont mesurées. Il est déterminé des premier et deuxième temps auxquels ces première et deuxième tensions atteignent des seuils. Le diagnostic du vieillissement du catalyseur est basé sur une différence d'aires entre les première et deuxième tensions qui est calculée dans l'intervalle défini par les premier et deuxième temps déterminés. Comme dans l'état de la technique décrit plus haut, ce procédé est intrusif car la mesure requiert un pilotage de la richesse du mélange air/carburant. Le document US2012/317960A1 divulgue une autre procédé.

Les écarts de l'estimation du vieillissement du catalyseur par rapport à son état réel peuvent conduire à des réglages non optimaux des consignes de richesse et entraîner une surconsommation du moteur, un vieillissement accéléré du catalyseur et des émissions plus fortes de polluants.

Il est donc souhaitable de disposer d'un procédé non intrusif qui permette d'estimer en permanence avec précision le vieillissement d'un catalyseur et cela pendant toute la vie du catalyseur, de l'état neuf à l'état fortement vieilli.

Selon un premier aspect, l'invention concerne un procédé d'estimation du vieillissement d'un catalyseur pour un moteur thermique dans un véhicule, le catalyseur étant monté dans une ligne d'échappement de gaz comportant au moins une sonde à oxygène située en aval du catalyseur. Conformément à l'invention, le procédé comprend les étapes de :

    a) calculer la valeur d'un indice de comportement du catalyseur à chaque occurrence d'un évènement de coupure d'injection de carburant qui satisfait des conditions préalablement définies, l'indice de comportement étant basé sur un rapport d'aires entre des première et deuxième aires obtenues en intégrant sur une durée d'intégration déterminée un taux estimé de stockage en oxygène du catalyseur et un signal de mesure de sonde fourni par la sonde à oxygène, respectivement, et

    b) déterminer un facteur de vieillissement représentatif du vieillissement du catalyseur par calcul statistique à partir d'un ensemble de valeurs de l'indice de comportement calculées sur plusieurs occurrences de l'événement de coupure d'injection de carburant.

L'invention autorise le suivi du catalyseur depuis son état neuf à un état très vieilli, en se basant sur le fait que le comportement d'une sonde à oxygène placée en aval du catalyseur, vis-à-vis d'un modèle théorique de saturation en oxygène, est un bon indicateur de vieillissement lors d'un cas de vie typique tel qu'une coupure d'injection lors d'une levée de pied de l'accélérateur. Le procédé de l'invention ne nécessite pas de pilotage intrusif de la richesse du mélange air/carburant. Le vieillissement du catalyseur peut être estimé en permanence par la comparaison entre la mesure de la sonde à oxygène aval et un modèle théorique de stockage d'oxygène.

Selon une caractéristique particulière, les conditions préalablement définies comprennent les conditions suivantes :

c) une valeur du taux estimé de stockage en oxygène qui est comprise dans une plage de valeurs déterminée à un temps de début d'occurrence de l'événement de coupure d'injection de carburant,

d) une valeur du signal de mesure de sonde qui est comprise dans une autre plage de valeurs déterminée au dit temps de début d'occurrence de l'événement de coupure d'injection de carburant, et

e) une durée de l'événement de coupure d'injection de carburant qui est supérieure à une durée minimum prédéfinie.

Selon une autre caractéristique particulière, la durée d'intégration est déterminée entre le temps de début d'occurrence de l'évènement de coupure d'injection de carburant et un temps de fin d'intégration qui correspond à l'instant auquel le taux estimé de stockage en oxygène atteint une valeur de seuil prédéfinie.

Selon encore une autre caractéristique particulière, la valeur calculée de l'indice de comportement est ajustée au moyen d'un seuil réglable définissant, sur la durée d'intégration déterminée, une aire d'ajustement qui est soustraite aux première et deuxième aires lors du calcul du rapport d'aires.

Selon encore une autre caractéristique particulière, une correction par l'intermédiaire d'un modèle de vieillissement est appliquée au signal de mesure de sonde.

Selon encore une autre caractéristique particulière, le calcul statistique comprend le calcul d'au moins une moyenne mobile de l'indice de comportement.

Selon un autre aspect, l'invention concerne aussi un calculateur comportant une mémoire stockant des instructions de programme pour la mise en œuvre du procédé décrit brièvement ci-dessus. Selon une forme de réalisation particulière, le calculateur est le calculateur de commande moteur du véhicule.

L'invention concerne également un ensemble comprenant un moteur thermique, le moteur ayant une ligne d'échappement de gaz équipée d'un catalyseur, d'au moins une sonde à oxygène (11) située en aval dudit catalyseur (1) et un calculateur tel que décrit ci-dessus.

L'invention concerne aussi un véhicule comprenant l'ensemble ci-dessus.

D'autres avantages et caractéristiques de la présente invention apparaîtront plus clairement à la lecture de la description détaillée ci-dessous d'une forme de réalisation particulière de l'invention, en référence aux dessins annexés, dans lesquels :

- la Fig.1 est un bloc-diagramme de principe montrant un catalyseur dans une ligne d'échappement de gaz et un calculateur comprenant un module logiciel embarqué pour la mise en œuvre du procédé de l'invention ;

- la Fig.2 montre un algorithme fonctionnel relatif à des étapes du procédé de l'invention ;

- les Figs.3 à 5 montrent des courbes explicatives relatives à un traitement de calcul d'indice de comportement intervenant dans le procédé de l'invention ;

- la Fig.6 est un graphique montrant, à titre d'exemple, trois séries de valeurs calculées de l'indice de comportement qui sont obtenues, respectivement, pour un catalyseur neuf, un catalyseur en fin de vie et un catalyseur en usage opérationnel ; et

- la Fig.7 est une courbe montrant l'évolution d'un facteur de vieillissement en fonction du vieillissement réel d'un catalyseur.

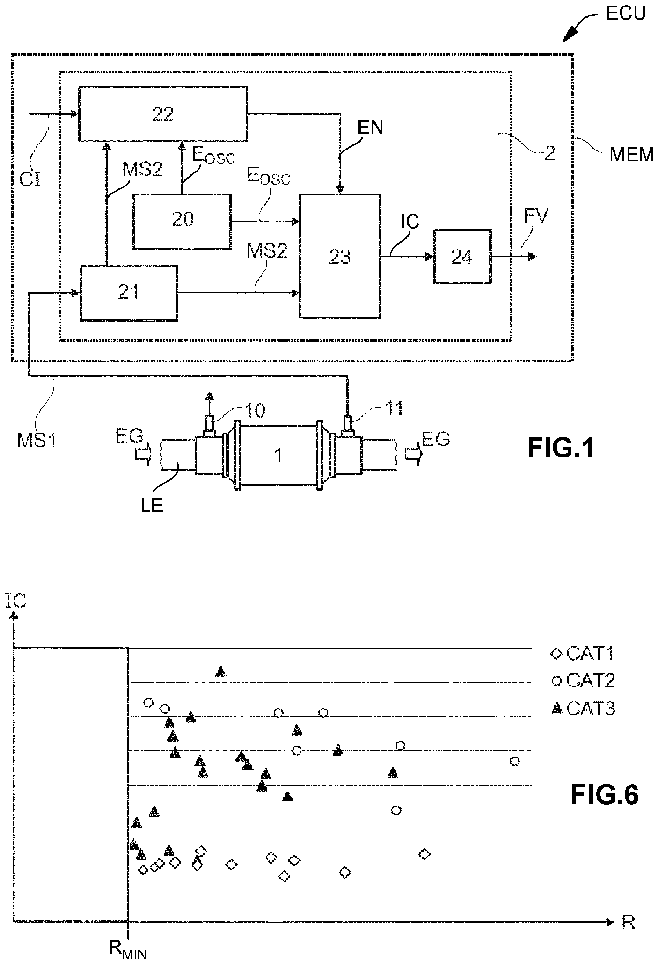

En référence à la Fig.1, un catalyseur d'oxydation 1 est inséré dans une ligne d'échappement de gaz LE d'un moteur thermique à essence (non représenté) et traite les gaz d'échappement EG du moteur. La ligne d'échappement LE comprend ici des sondes à oxygène 10 et 11 qui sont montées respectivement en amont et en aval du catalyseur 1. La sonde 11 montée en aval du catalyseur 1 est utile pour la mise en œuvre du procédé selon l'invention.

Le procédé de l'invention pour estimer le vieillissement du catalyseur 1 fait appel à un module logiciel dédié 2 implanté dans une mémoire MEM d'un calculateur ECU. Le module logiciel 2 autorise la mise en œuvre du procédé selon l'invention par l'exécution d'instructions de code de programme par un processeur (non représenté) du calculateur ECU.

Dans cette forme de réalisation, le calculateur ECU est le calculateur de contrôle moteur du véhicule. Un signal de mesure brute MS1 délivré par la sonde à oxygène aval 11 est fourni au module logiciel 2 à travers un port d'entrée/sortie (non représenté) du calculateur ECU. En variante, le signal de mesure brute de sonde MS1 pourra être fourni au module logiciel 2 à travers un réseau CAN du véhicule auquel sont connectées le calculateur ECU et la sonde à oxygène aval 11.

Comme montré à la Fig.1, le module logiciel 2 comporte essentiellement quatre blocs fonctionnels 20 à 24.

Le bloc fonctionnel 20 est un modèle théorique de stockage en oxygène qui calcule en temps réel un taux estimé de stockage en oxygène $E_{OSC}$ du catalyseur 1. Le modèle 20 est celui du catalyseur 1 à l'état neuf et le taux de stockage en oxygène $E_{OSC}$ calculé est indépendant du vieillissement.

Le bloc fonctionnel 21 est un module de mesure de la richesse du mélange air/carburant à l'échappement, en sortie du catalyseur 1. Dans le module de mesure 21, le signal de mesure brute MS1, fourni par la sonde à oxygène aval 11, peut être corrigé par l'intermédiaire d'un modèle de vieillissement qui permet d'obtenir un signal de mesure de sonde dépendant uniquement de l'état du catalyseur 1, par la suppression d'une dérive/dispersion de la mesure dans le temps. Le module de mesure 21 délivre un signal de mesure de sonde MS2 qui est fourni au bloc fonctionnel 23.

Le bloc fonctionnel 22 est un module d'activation de mesure dont la fonction est d'activer la prise de mesures pour le calcul d'un indice de comportement IC du catalyseur 1 lorsque des conditions préalables sont satisfaites. Les conditions préalables correspondent à des conditions identifiées comme étant les plus favorables pour la réussite de l'estimation du vieillissement du catalyseur 1. Le module 22 reçoit en entrée le taux estimé de stockage en oxygène $E_{OSC}$ et le signal de mesure de sonde MS2 fournis par les modules 20 et 21, ainsi qu'une information de coupure d'injection CI. Un signal d'autorisation de mesure EN est délivré par le module d'activation de mesure 22 et est fourni au bloc fonctionnel 23.

Le bloc fonctionnel 23 est un module de calcul d'indice de comportement. L'indice de comportement IC du catalyseur 1 est calculé en permanence par le module 23, c'est-à-dire, à chaque occurrence du signal d'autorisation de mesure EN. L'indice de comportement IC évolue en fonction du vieillissement du catalyseur 1.

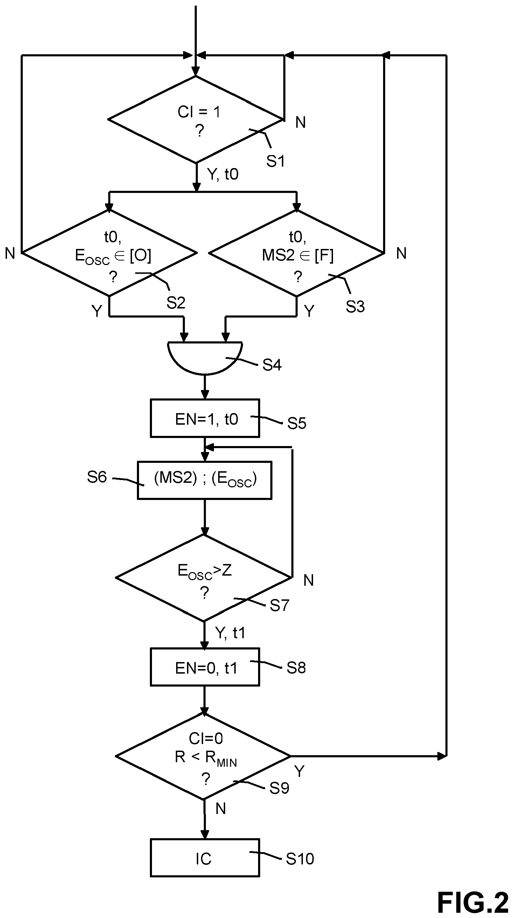

Les traitements réalisés par le module d'activation de mesure 22 et le module de calcul d'indice de comportement 23 sont décrits en détail ci-dessous en référence aussi aux Figs.2 à 5.

Le processus de traitement effectué par le module d'activation de mesure 22 est représenté par les blocs S1 à S8 de l'algorithme fonctionnel de la Fig.2.

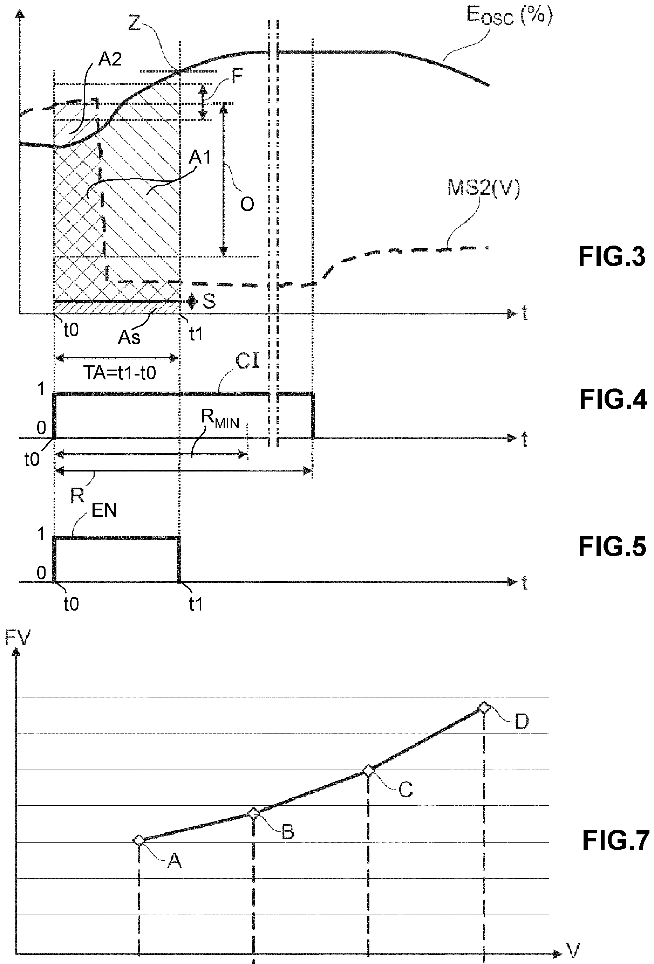

Dans le bloc S1, lorsqu'il est détecté une coupure de l'injection de carburant à un instant t0, typiquement sur une levée de pied de l'accélérateur, cet évènement indiqué par l'information CI =1 (cf. Fig.4) active une sortie Y du bloc S1 qui autorise l'exécution des blocs S2 et S3. Dans le bloc S1, la sortie N, CI=0, active une boucle d'attente de CI=1.

Dans les blocs S2, S3 et S4, il est vérifié la satisfaction des deux conditions préalables a) et b) suivantes :

Bloc S2 :

$$E_{OSC} \in [O] \qquad (a)$$

Bloc S3 :

$$MS2 \in [F] \qquad (b)$$

La satisfaction de la condition a) intervient lorsqu'à l'instant (t0, cf. Fig.3) la valeur du taux estimé de stockage en oxygène $E_{OSC}$ est comprise dans une plage déterminée O de valeurs du taux $E_{OSC}$.

La satisfaction de la condition b) intervient lorsqu'à l'instant (t0, cf. Fig.3) la valeur du signal de mesure de sonde MS2 est comprise dans une plage prédéfinie F de valeurs du signal de mesure de sonde MS2.

La satisfaction simultanée des conditions a) et b) à l'instant t0 est vérifiée par le bloc S4 de fonction logique ET. Dans ce cas contraire, une sortie N au moins des blocs S2, S3, est activée et le processus est renvoyé au bloc S1. La satisfaction simultanée des conditions a) et b) garantit que le catalyseur 1 est suffisamment purgé de son oxygène avant la mesure.

Dans le bloc S5, les conditions a) et b) étant satisfaites à l'instant t0, le signal d'autorisation de mesure EN est placé à l'état EN=1 (cf. Fig.5) par le processus.

Comme représenté par les blocs S6 et S7, le signal d'autorisation de mesure EN=1 active l'acquisition de séries d'échantillons de mesure ($E_{OSC}$) et (MS2) sur les signaux de taux estimé de stockage en oxygène $E_{OSC}$ et de mesure de sonde MS2, respectivement. Les échantillons de mesure ($E_{OSC}$) et (MS2) sont acquis jusqu'à ce que le taux estimé de stockage en oxygène $E_{OSC}$ atteigne une valeur de seuil prédéfinie Z, montrée à la Fig.3. La valeur de seuil prédéfinie Z du taux estimé de stockage en oxygène $E_{OSC}$ est atteinte à un temps t1.

Dans le bloc S8, au temps t1 où le taux estimé de stockage en oxygène $E_{OSC}$ atteint la valeur de seuil prédéfinie Z, le signal d'autorisation de mesure EN est placé à l'état EN=0 (cf. Fig.5) par le processus. Le signal d'autorisation de mesure EN=0 met fin à l'acquisition des séries d'échantillons de mesure ($E_{OSC}$) et (MS2).

Dans le procédé de l'invention, les séries d'échantillons de mesure ($E_{OSC}$) et (MS2) acquises ne sont exploitées pour le calcul d'un indice de comportement IC que si la durée R (cf. Fig.4) de la coupure d'injection, CI=1, excède une durée minimum de coupure d'injection $R_{MIN}$ (cf. Fig.4). Cette partie du traitement est illustrée par le bloc de traitement S9 à la Fig.2 qui s'active à la fin de la coupure d'injection CI=0. Le bloc S10 représente le calcul de l'indice de comportement IC.

Le module de calcul d'indice de comportement 23 calcule des aires A1 et A2 (cf. Fig.3) par des intégrations, respectivement, du taux estimé de stockage en oxygène $E_{OSC}$ et du signal de mesure de sonde MS2 sur la durée d'acquisition, ou durée d'intégration, TA = t1-t0, à partir des séries d'échantillons de mesure ($E_{OSC}$) et (MS2). L'indice de comportement IC est ensuite calculé en appliquant l'égalité suivante :

$$IC = (A1-As)/(A2-As)$$

dans laquelle A1 et A2 sont les aires telles que définies ci-dessus et As (cf. Fig.3) est l'aire obtenue par l'intégration d'un seuil réglable S sur la durée d'acquisition TA. Le seuil réglable S autorise un ajustement de la valeur de l'indice IC notamment pour tenir compte de la disparité des réponses des catalyseurs et des sondes à oxygène dans différents véhicules. De préférence, la valeur du seuil réglable S est ajustée de manière automatique, de manière connue par l'homme du métier.

A la Fig.1, le bloc fonctionnel 24 est un module de traitement statistique qui réalise l'estimation du vieillissement du catalyseur 1 à partir d'un traitement statistique appliqué à l'indice de comportement IC. Le calcul de l'indice de comportement IC étant répété en permanence pendant le roulage du véhicule, plusieurs valeurs de l'indice IC sont disponibles dans un intervalle de temps considéré. Le module de traitement statistique 24 pourra réaliser différents types de calcul statistique, comme des calculs de moyennes, pour estimer le vieillissement du catalyseur 1.

A titre illustratif, il est représenté à la Fig.6, trois séries de valeurs CAT1, CAT2 et CAT3 de l'indice IC qui sont obtenues, respectivement, pour un catalyseur neuf, un catalyseur en fin de vie (OBD) et un catalyseur en usage opérationnel. Par « catalyseur en usage opérationnel » il faut comprendre un catalyseur qui est fonctionnel et dont le vieillissement ne dépasse pas la limite fixée par la réglementation européenne relative à la durabilité des catalyseurs. Ces séries de valeurs CAT1, CAT2 et CAT3 sont obtenus avec différentes durées R de coupure d'injection. Comme cela apparaît à la Fig.6, l'indice IC prend des valeurs faibles pour un catalyseur neuf et augmente avec l'âge du catalyseur.

Ainsi, dans le traitement effectué par le module de traitement statistique 24, les différentes valeurs de l'indice IC obtenues pour le catalyseur 1 pendant un intervalle de temps peuvent, par exemple, être intégrées ou filtrées avec une ou plusieurs moyennes mobiles afin d'obtenir un indice de comportement moyen, désigné ci-après « facteur de vieillissement », qui représente une tendance et permet de quantifier le vieillissement du catalyseur 1. Le facteur de vieillissement, référencé ci-après FV, est la sortie principale du module de traitement statistique 24. La Fig.7 montre un exemple d'évolution du facteur de vieillissement FV en fonction du vieillissement réel V. Les points A, B, C et D correspondent respectivement à un catalyseur neuf, un catalyseur vieilli, un catalyseur fortement vieilli et un catalyseur en fin de vie (OBD).

Dans certaines formes de réalisation, le module de traitement statistique 24 pourra réaliser aussi des traitements supplémentaires sur les valeurs de l'indice de comportement IC afin d'identifier des tendances spécifiques, comme par exemple une tendance représentative d'une dégradation brusque du catalyseur 1. Les interactions entre plusieurs indices de comportement moyens calculés, comme des croisements, ou bien leurs dynamiques et d'autres caractéristiques, pourront être considérées pour cela.

L'invention ne se limite pas à la forme de réalisation particulière qui a été décrite ici à titre d'exemple. L'homme du métier, selon les applications de l'invention, pourra y apporter différentes modifications et variantes qui entrent dans la portée des revendications ci-annexées.

## Revendications

1. Procédé d'estimation du vieillissement d'un catalyseur (1) pour un moteur thermique dans un véhicule, ledit catalyseur (1) étant monté dans une ligne d'échappement de gaz (LE) comportant au moins une sonde à oxygène (11) située en aval dudit catalyseur (1), le procédé comprenant les étapes de :

   a) calculer (23, S10) la valeur d'un indice de comportement (IC) dudit catalyseur (1) à chaque occurrence (CI, 22) d'un évènement de coupure d'injection de carburant qui satisfait des conditions préalablement définies (S1, S2, S3, S9), ledit indice de comportement (IC) étant basé sur un rapport d'aires entre des première et deuxième aires (A1, A1-As ; A2, A2-As) obtenues en intégrant sur une durée d'intégration déterminée (TA) un taux estimé de stockage en oxygène ($E_{OSC}$) dudit catalyseur (1) et un signal de mesure de sonde (MS2) fourni par ladite sonde à oxygène (11), respectivement, et
   b) déterminer (24) un facteur de vieillissement (FV) représentatif du vieillissement (V) dudit catalyseur (1) par calcul statistique à partir d'un ensemble de valeurs dudit indice de comportement (IC) calculées sur plusieurs occurrences (CI, 22) dudit évènement de coupure d'injection de carburant.

2. Procédé selon la revendication 1, **caractérisé en ce que** lesdites conditions préalablement définies (S1, S2, S3, S9) comprennent les conditions suivantes :

   c) une valeur dudit taux estimé de stockage en oxygène ($E_{OSC}$) qui est comprise dans une plage de valeurs déterminée (O) à un temps (t0) de début d'occurrence (CI, 22) dudit évènement de coupure d'injection de carburant,
   d) une valeur dudit signal de mesure de sonde (MS2) qui est comprise dans une autre plage de valeurs déterminée (F) audit temps (t0) de début

d'occurrence (CI, 22) dudit évènement de coupure d'injection de carburant, et

e) une durée (R) dudit évènement de coupure d'injection de carburant qui est supérieure à une durée minimum prédéfinie (R$_{MIN}$).

3. Procédé selon la revendication 2, **caractérisé en ce que** ladite durée d'intégration (TA) est déterminée entre ledit temps de début d'occurrence (t0) dudit évènement de coupure d'injection de carburant et un temps de fin d'intégration (t1) qui correspond à l'instant auquel ledit taux estimé de stockage en oxygène (E$_{OSC}$) atteint une valeur de seuil prédéfinie (Z).

4. Procédé selon l'une quelconque des revendications 1 à 3, **caractérisé en ce que** la valeur calculée dudit indice de comportement (IC) est ajustée au moyen d'un seuil réglable (S) définissant, sur ladite durée d'intégration déterminée (TA), une aire d'ajustement (As) qui est soustraite auxdites première et deuxième aires (A1-As ; A2-As) lors du calcul dudit rapport d'aires.

5. Procédé selon l'une quelconque des revendications 1 à 4, **caractérisé en ce qu'**une correction (21) par l'intermédiaire d'un modèle de vieillissement est appliquée audit signal de mesure de sonde (MS1).

6. Procédé selon l'une quelconque des revendications 1 à 5, **caractérisé en ce que** ledit calcul statistique comprend le calcul d'au moins une moyenne mobile dudit indice de comportement (IC).

7. Calculateur (ECU) comportant une mémoire (MEM) stockant des instructions de programme pour la mise en œuvre du procédé selon l'une quelconque des revendications 1 à 6.

8. Calculateur selon la revendication 7, **caractérisé en ce que** ledit calculateur est le calculateur de commande moteur (ECU) d'un véhicule.

9. Ensemble comprenant un moteur thermique, ledit moteur ayant une ligne d'échappement de gaz (LE) équipée d'un catalyseur (1), d'au moins une sonde à oxygène (11) située en aval dudit catalyseur (1) et un calculateur, **caractérisé en ce que** ledit calculateur est un calculateur (ECU) selon la revendication 7 ou 8.

10. Véhicule comportant un ensemble selon la revendication 9.

**Patentansprüche**

1. Verfahren zum Abschätzen der Alterung eines Katalysators (1) für einen Verbrennungsmotor in einem Fahrzeug, wobei der Katalysator (1) in einer Abgasleitung (LE) montiert ist, die mindestens eine Sauerstoffsonde (11) aufweist, die stromabwärts des Katalysators (1) angeordnet ist, wobei das Verfahren die folgenden Schritte umfasst:

a) Berechnen (23, S10) des Wertes eines Verhaltensindex (IC) des Katalysators (1) bei jedem Auftreten (CI, 22) eines Unterbrechungsereignisses der Kraftstoffeinspritzung, das vordefinierte Bedingungen (S1, S2, S3, S9) erfüllt, wobei der Verhaltensindex (IC) auf einem Flächenverhältnis zwischen ersten und zweiten Flächen (A1, A1-As ; A2, A2-As), die durch Integration einer geschätzten Sauerstoffspeicherrate (Eosc) des Katalysators (1) und eines von der Sauerstoffsonde (11) gelieferten Sondenmesssignals (MS2) über eine vorbestimmte Integrationszeit (TA) erhalten werden, und

b) Bestimmen (24) eines Alterungsfaktors (FV), der für die Alterung (V) des Katalysators (1) repräsentativ ist, durch statistische Berechnung aus einem Satz von Werten des Verhaltensindex (IC), die über eine Vielzahl von Vorkommnissen (CI, 22) des Kraftstoffeinspritzunterbrechungsereignisses berechnet wurden.

2. Verfahren nach Anspruch 1, **dadurch gekennzeichnet, dass** die zuvor definierten Bedingungen (S1, S2, S3, S9) die folgenden Bedingungen umfassen:

c) einen Wert der geschätzten Sauerstoffspeicherrate (E$_{OSC}$), der zu einem Zeitpunkt (t0) des Beginns des Auftretens (CI, 22) des Kraftstoffeinspritzabschaltungsereignisses innerhalb eines vorbestimmten Wertebereichs (O) liegt,

d) einen Wert des Sonden-Messsignals (MS2), der zu dem Zeitpunkt (t0) des Auftretens (CI, 22) des Kraftstoffeinspritz-Abschaltungsereignisses innerhalb eines anderen vorbestimmten Wertebereichs (F) liegt, und

e) eine Dauer (R) des besagten Unterbrechungsereignisses der Kraftstoffeinspritzung, die größer als eine vordefinierte Mindestdauer (RMIN) ist.

3. Verfahren nach Anspruch 2, **dadurch gekennzeichnet, dass** die Integrationszeit (TA) zwischen der Anfangszeit des Auftretens (t0) des Ereignisses der Unterbrechung der Kraftstoffeinspritzung und einer Integrationsendzeit (t1) bestimmt wird, die dem Zeitpunkt entspricht, zu dem die geschätzte Sauerstoffspeicherrate (E$_{OSC}$) einen vordefinierten Schwellenwert (Z) erreicht.

4. Verfahren nach einem der Ansprüche 1 bis 3, **da-**

**durch gekennzeichnet, dass** der berechnete Wert des Verhaltensindex (IC) mittels einer einstellbaren Schwelle (S) eingestellt wird, die über die bestimmte Integrationszeit (TA) eine Einstellfläche (As) definiert, die bei der Berechnung des Flächenverhältnisses von der ersten und der zweiten Fläche (A1-As; A2-As) subtrahiert wird.

5. Verfahren nach einem der Ansprüche 1 bis 4, **dadurch gekennzeichnet, dass** eine Korrektur (21) über ein Alterungsmodell auf das Sondenmesssignal (MS1) angewendet wird.

6. Verfahren nach einem der Ansprüche 1 bis 5, **dadurch gekennzeichnet, dass** die statistische Berechnung die Berechnung mindestens eines gleitenden Durchschnitts des Verhaltensindex (IC) umfasst.

7. Ein Computer (ECU) mit einem Speicher (MEM), der Programmbefehle zur Ausführung des Prozesses gemäß einem der Ansprüche 1 bis 6 speichert.

8. Rechner nach Anspruch 7, **dadurch gekennzeichnet, dass** der Rechner der Motorsteuerungsrechner (ECU) eines Fahrzeugs ist.

9. Anordnung mit einem Verbrennungsmotor, wobei der Motor eine mit einem Katalysator (1) ausgestattete Abgasleitung (LE), mindestens einen stromabwärts des Katalysators (1) angeordneten Sauerstoffsensor (11) und einen Computer aufweist, **dadurch gekennzeichnet, dass** der Computer ein Motorsteuerungscomputer (ECU) nach Anspruch 7 oder 8 ist.

10. Ein Fahrzeug, das eine Baugruppe nach Anspruch 9 umfasst.

**Claims**

1. A method of estimating the ageing of a catalyst (1) for an internal combustion engine in a vehicle, said catalyst (1) being mounted in a gas exhaust line (LE) having at least one oxygen probe (11) located downstream of said catalyst (1), the method comprising the steps of :

   a) calculating (23, S10) the value of a behavior index (IC) of said catalyst (1) at each occurrence (CI, 22) of a fuel injection cut-off event which satisfies predefined conditions (S1, S2, S3, S9), said behavior index (IC) being based on an area ratio between first and second areas (A1, A1-As ; A2, A2-As) obtained by integrating over a predetermined integration time (TA) an estimated oxygen storage rate ($E_{OSC}$) of said catalyst (1) and a probe measurement signal (MS2) provided by said oxygen probe (11), respectively, and
   b) determining (24) an ageing factor (FV) representative of the ageing (V) of said catalyst (1) by statistical calculation from a set of values of said behaviour index (IC) calculated over a plurality of occurrences (CI, 22) of said fuel injection cut-off event.

2. Method according to claim 1, **characterized in that** said previously defined conditions (S1, S2, S3, S9) comprise the following conditions:

   c) a value of said estimated oxygen storage rate ($E_{OSC}$) which is within a predetermined value range (O) at a time (t0) of start of occurrence (CI, 22) of said fuel injection cut-off event,
   d) a value of said probe measurement signal (MS2) which is within another predetermined value range (F) at said time (t0) of occurrence (CI, 22) of said fuel injection cut-off event, and
   e) a duration (R) of said fuel injection cut-off event that is greater than a predefined minimum duration (RMIN).

3. A method according to claim 2, **characterized in that** said integration time (TA) is determined between said start time of occurrence (t0) of said fuel injection cut-off event and an integration end time (t1) which corresponds to the time at which said estimated oxygen storage rate ($E_{OSC}$) reaches a predefined threshold value (Z).

4. Method according to any one of claims 1 to 3, **characterized in that** the calculated value of said behaviour index (IC) is adjusted by means of an adjustable threshold (S) defining, over said determined integration time (TA), an adjustment area (As) which is subtracted from said first and second areas (A1-As; A2-As) when calculating said area ratio.

5. A method according to any one of claims 1 to 4, **characterized in that** a correction (21) via an aging model is applied to said probe measurement signal (MS1).

6. A method according to any one of claims 1 to 5, **characterized in that** said statistical calculation comprises calculating at least a moving average of said behaviour index (IC).

7. A computer (ECU) having a memory (MEM) storing program instructions for carrying out the process according to any one of claims 1 to 6.

8. A computer according to claim 7, **characterized in that** said computer is the engine control computer (ECU) of a vehicle.

9. An assembly comprising an internal combustion engine, said engine having a gas exhaust line (LE) equipped with a catalyst (1), at least one oxygen sensor (11) located downstream of said catalyst (1) and a computer, **characterized in that** said computer is an engine control computer (ECU) according to claim 7 or 8.

10. A vehicle comprising an assembly according to claim 9.

**FIG.1**

**FIG.6**

**FIG.2**

FIG.3

FIG.4

FIG.5

FIG.7

## RÉFÉRENCES CITÉES DANS LA DESCRIPTION

**Documents brevets cités dans la description**

- US 7536851 B2
- US 2012317960 A1